(19) Europäisches Patentamt
European Patent Office
Office européen des brevets

(11) Veröffentlichungsnummer: **0 081 143**
**B1**

(12) **EUROPÄISCHE PATENTSCHRIFT**

(45) Veröffentlichungstag der Patentschrift: **25.07.84**

(51) Int. Cl.³: **C 09 K 3/34**, C 09 B 5/62, C 07 D519/00

(21) Anmeldenummer: **82110860.2**

(22) Anmeldetag: **24.11.82**

(54) **Verwendung von Perylenderivaten als Farbstoffe für Flüssigkristallmischungen.**

(30) Priorität: **05.12.81 DE 3148206**

(43) Veröffentlichungstag der Anmeldung: **15.06.83 Patentblatt 83/24**

(45) Bekanntmachung des Hinweises auf die Patenterteilung: **25.07.84 Patentblatt 84/30**

(84) Benannte Vertragsstaaten: **CH DE FR GB IT LI**

(56) Entgegenhaltungen: **EP-A- 0 047 027**

(73) Patentinhaber: **BASF Aktiengesellschaft**
**Carl-Bosch-Strasse 38**
**D-6700 Ludwigshafen (DE)**

(72) Erfinder: **Etzbach, Karl-Heinz, Dr.**
**Bensheimer Ring 9 A**
**D-6710 Frankenthal (DE)**
Erfinder: **Graser, Fritz, Dr.**
**Blieskasteler Strasse 17**
**D-6700 Ludwigshafen (DE)**
Erfinder: **Horn, Dieter, Dr.**
**Schroederstrasse 69**
**D-6900 Heidelberg (DE)**
Erfinder: **Ditter, Walter**
**Feuerbachstrasse 7**
**D-6900 Heidelberg (DE)**

**EP 0 081 143 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft die Verwendung von Perylenderivaten der allgemeinen Formel I

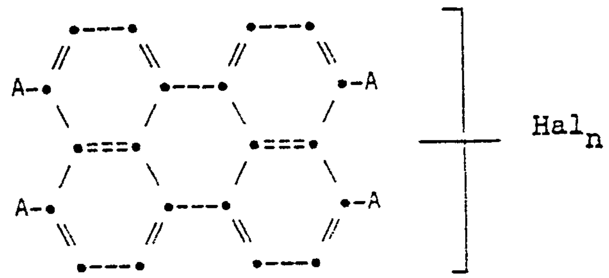

(I)

in der

Hal für Chlor, Brom oder Chlor und Brom,

n für 2 bis 14 und die periständigen A zusammen für eine Gruppe der Formeln II oder III

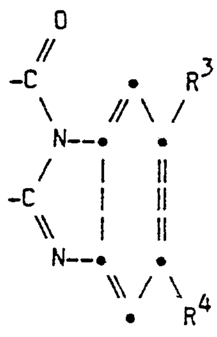

oder

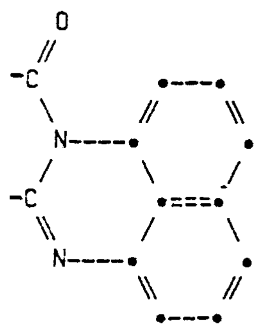

(II) (III)

stehen, worin

$R^3$ und $R^4$ Wasserstoff oder einer der Reste $R^3$ oder $R^4$ $C_1$-bis $C_{12}$-Alkyl, Cyclohexyl, Chlor oder Brom bedeuten, in Flüssigkristalle enthaltenden elektrooptischen Anzeigen.

Die erfindungsgemäß zu verwendenden Perylenderivate (I) zeichnen sich durch ein hohes dichroitisches Verhältnis und sehr gute Lichtechtheit in flüssigkristallinen Medien aus.

$R^3$ und $R^4$ sind Wasserstoff oder einer der Reste ist Methyl, Ethyl, Propyl, Butyl, Hexyl, Pentyl, Heptyl, Octyl, Nonyl, Dodecyl, Cyclohexyl, Chlor oder Brom und der andere Wasserstoff.

Flüssigkristallmischungen und ihre Verwendung sind z. B. aus den DE-OS 29 02 177, 29 03 095 und 29 50 944 bekannt. In diesen OS ist auch weitere Literatur und die theoretischen Grundlagen der erfindungsgemäßen Verwendung erörtert.

Gegenüber den bisher für die erfindungsgemäße Verwendung vorgeschlagenen Verbindungen zeichnen sich die Verbindungen der Formel I durch ein besonders hohes dichroitisches Verhältnis, gute Lichtechtheit und gute Löslichkeit in flüssigkristallinen Medien aus. Sie lassen sich weiterhin leicht in reiner Form gewinnen.

Die Farbstoffe können nach bekannten Verfahren hergestellt werden. Die Verbindungen der Formel I mit n = 2-14 können durch Chlorierung oder Bromierung und Chlorierung der Verbindungen I (n = 0,1 oder 2) nach bekannten Verfahren erhalten werden, z. B. durch Chlorierung oder Bromierung der in Chlorsulfonsäure gelösten Verbindungen. Bei diesem Verfahren können bis zu 14 Halogenatome eingeführt werden.

Man kann aber auch Chlor- oder Brom-chlorperylentetracarbonsäuredianhydrid mit den entsprechenden o-Phenylendiaminen oder 1,8-Naphthylendiamin zu I umsetzen. In diesem Fall beträgt n im Mittel 2 bis 7 ; bei Verwendung von Chlor- oder Brom-o-phenylendiamin kann n im Mittel maximal 8 sein.

Die Erfindung soll durch die folgenden Beispiele zusätzlich erläutert werden.

Die Messungen wurden in der nematischen Phase ZLJ-1691 der Firma Merck durchgeführt.

Die Messungen wurden an einem Spektralphotometer der Fa. Zeiss DMR 21 durchgeführt. Das dichroitische Verhältnis CR wurde durch Messung der Extinktionen E parallel (E″) und E senkrecht ($E^{\perp}$) zur Flüssigkristallvorzugsrichtung nach der Beziehung

$$CR = E''/E^{\perp}$$

ermittelt. Hierzu wurden handelsübliche Meßzellen mit einer Schichtdicke von 10 µm eingesetzt.

Der Ordnungsgrad S wurde nach der bekannten Gleichung

$$S = CR - 1/CR + 2$$

berechnet.

Beispiele 1 bis 5

In die nematische Phase wurden die in der Tabelle angegebenen Perylenderivate eingearbeitet :

Die bei den Beispielen 1 bis 5 eingearbeiteten Perylenderivate wurden durch Chlorierung und Bromierung der entsprechenden Verbindungen I mit n = 0 hergestellt.

Die bei den Beispielen 6 bis 10 verwendeten Perylenderivate wurden durch Umsetzen von Chlorperylentetracarbonsäureanhydrid mit den entsprechenden Diaminen hergestellt.

| Beisp. | periständige A | Hal | n | λ max. [nm] | S |
|---|---|---|---|---|---|
| 1 | 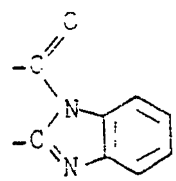 | Cl | 9 | 581 | 0,64 |
| 2 | " | Cl | 14 | 584,5 | 0,82 |
| 3 | " | Br<br>Cl | 2<br>2 | 588 | 0,80 |
| 4 | 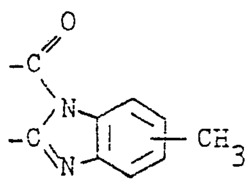 | Cl | 10 | 582 | 0,73 |
| 5 | 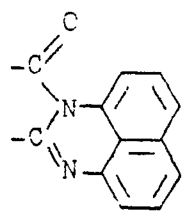 | Cl | 11,5 | 560 | 0,65 |
| 6 | 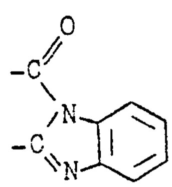 | Cl | 3,5 | 588 | 0,76 |
| 7 | " | Cl | 5,2 | 590,5 | 0,79 |
| 8 | 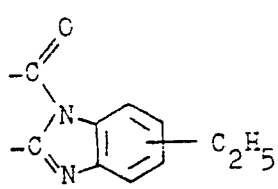 | Cl | 5,2 | 593 | 0,80 |

(Fortsetzung)

| Beisp. | periständige A | Hal | n | λ max. [nm] | S |
|---|---|---|---|---|---|
| 9 | 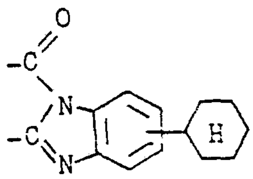 | Cl | 4,0 | 591,5 | 0,80 |
| 10 | 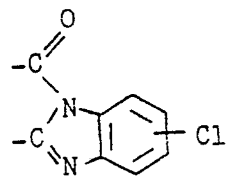 | Cl | 4,0 | 585,5 | 0,73 |

In der Figur 1 sind die Absorptionsspektren der Verbindung des Beispiels 3 in parallel und senkrecht polarisiertem Licht dargestellt.

## Ansprüche

1. Verwendung von Perylenderivaten der allgemeinen Formel

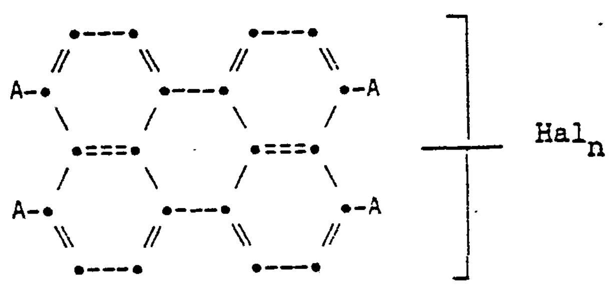

(I)

in der

Hal für Chlor, Brom oder Chlor und Brom,

n für 2 bis 14 und die periständigen A zusammen für eine Gruppe der Formeln II oder III

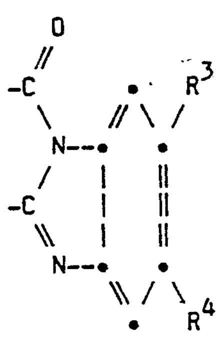

oder

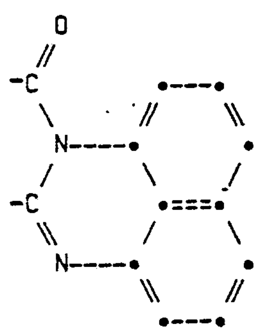

(II) (III)

und $R^3$ und $R^4$ für Wasserstoff oder einer der Reste $R^3$ oder $R^4$ für $C_1$- bis $C_{12}$-Alkyl, Cyclohexyl, Chlor oder Brom stehen, in Flüssigkristalle enthaltenden elektrooptischen Anzeigen.

2. Flüssigkristallmischungen, enthaltend Farbstoffe gemäß der allgemeinen Formel I in Anspruch 1.

## Claims

1. The use of perylene derivatives of the general formula

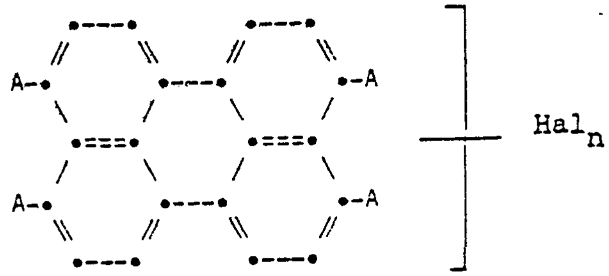

(I)

where

Hal is chlorine or bromine, or chlorine and bromine,

n is 2 to 14, and the pair of A's in the 3- and 4-positions and the pair of A's in the 9- and 10-positions are each a group of the formula II or III

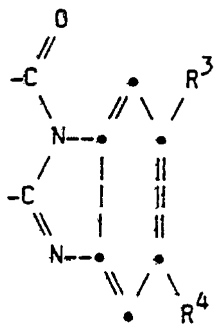

(II)

or

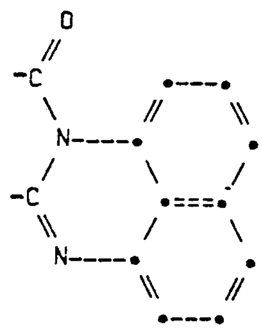

(III)

and $R^3$ and $R^4$ are each hydrogen or one of the radicals $R^3$ or $R^4$ is alkyl of 1 to 12 carbon atoms, cyclohexyl, chlorine or bromine, in electrooptical displays containing liquid crystals.

2. Liquid crystal mixture containing dyes of the general formula I in claim 1.

## Revendications

1. Utilisation de dérivés du pérylène de formule générale

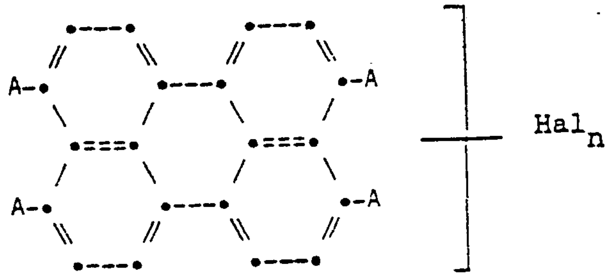

(I)

dans laquelle

Hal. est mis pour le chlore, le brome ou le chlore et le brome,

n est un nombre de 2 à 14 et les symboles A en position péri représentent ensemble un groupe de formule II ou III

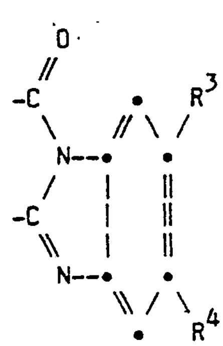

(II)

ou

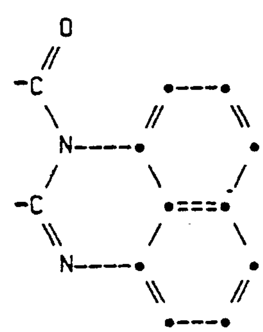

(III)

$R^3$ et $R^4$ étant mis chacun pour un hydrogène ou l'un des radicaux $R^3$ ou $R^4$ étant mis pour un alcoyle en $C_1$ à $C_{12}$, un cyclohexyle, un chlore ou un brome,
dans des dispositifs d'affichage électro-optiques contenant des cristaux liquides.

2. Mélanges de cristaux liquides, contenant des matières colorantes répondant à la formule générale 1 de la revendication 1.

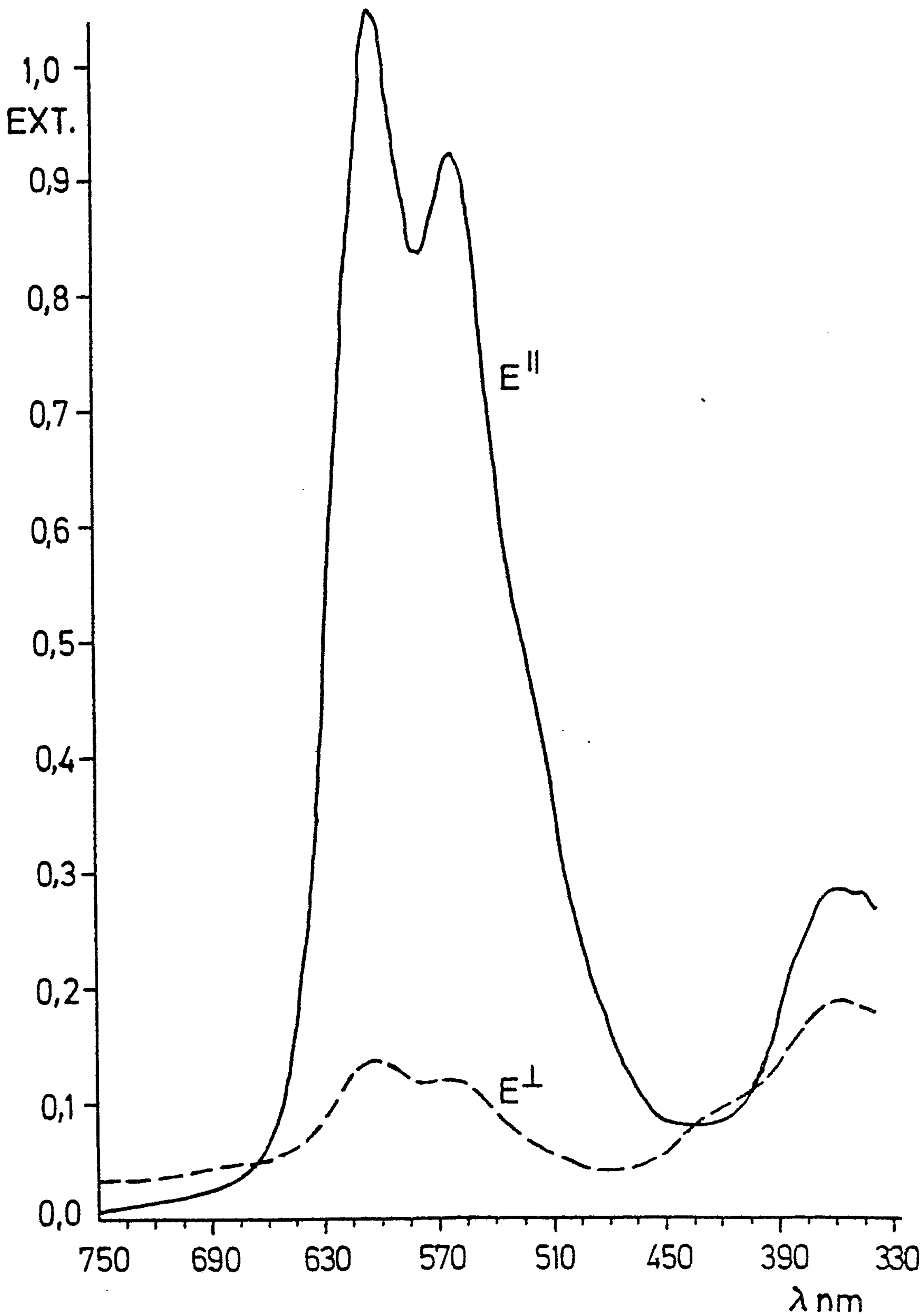
1,0
EXT.
0,9
0,8
0,7
0,6
0,5
0,4
0,3
0,2
0,1
0,0
E ||
E ⊥
750
690
630
570
510
450
390
330
λ nm